# EUROPEAN PATENT APPLICATION

(11) **EP 2 501 203 A1**
(43) Date of publication of application: **19.09.2012**
(21) Application number: 10849716.5
(22) Date of filing: 23.08.2010
(51) Int. Cl.: H04W 99/00, H04L 29/10, G06F 17/00

(54) **UNIVERSAL DRIVING METHOD AND DRIVER OF MOBILE BROADBAND DEVICE**

(30) Priority: 13.04.2010 CN 201010145288
(71) Applicant: ZTE Corporation, Shenzhen, Guangdong 518057 (CN)
(72) Inventor: CHEN, Feixiong, Shenzhen Guangdong 518057 (CN); GUO, Qingji, Shenzhen Guangdong 518057 (CN); MA, Shaofeng, Shenzhen Guangdong 518057 (CN); ZUO, Zhao, Shenzhen Guangdong 518057 (CN); TIAN, Zhibing, Shenzhen Guangdong 518057 (CN); BAI, Jie, Shenzhen Guangdong 518057 (CN)
(74) Representative: Petraz, Gilberto Luigi
(86) International application number: PCT/CN2010/076266
(87) International publication number: WO 2011/127707

(57) **Abstract**

The present invention discloses a universal driving method and a driver of a mobile broadband device. The method includes: a WWAN server sending an OID service request to a driver; the driver sending the OID service request to a WWAN device; the WWAN device responding after parsing the OID service request, and sending a response result to the driver; the driver sending the response result to the WWAN server. The present invention is implemented by delivering the parse processing of the OID service to the WWAN device, and the driver only has a transparent transmission function, therefore the driver is universal and is able to adapt to WWAN devices in different standards; the AT module is deleted, and it's I/O function utilizes the existing reading and writing threads, thus simplifying the complex process in the existing AT module, and guaranteeing the stability and robustness of the device drivers.

## Description

### Technical Field

The present invention relates to the mobile communication technology field, and more especially, to a universal driving method and a driver of a mobile broadband device.

### Background of the Related Art

Nowadays, the broadband Internet has been providing people with home entertainments, business officing and other fixed broadband services. However, people have a growing demand for providing mobile broadband services in any place, at any time. Because of a narrow bandwidth problem in the 2G network, there is no large-scale promotion of mobile broadband services. Currently, with the development of the 3G network, based on its high-bandwidth characteristics, mobile broadband services have been able to meet the use requirements of people's daily work and life services of travels, mobile officing, and so on.

At present, a device terminal providing Wireless Wide Area Network (WWAN) for mobile broadband services usually adopts three different standards, namely, Time Division-Synchronous Code Division Multiple Access (TD-SCDMA), Wideband Code Division Multiple Access (WCDMA) and Code Division Multiple Access 2000 (CDMA2000). For the operational control of calls, short messages, phone books, and data services, each standard provides users with a set of AT (Attention) instruction set, to interact with its WWAN devices to control services; however, these three sets of AT commands are not exactly the same. In addition, sometimes, an Independent hardware vendor (IHV) device might add its own dedicated AT commands. Thus, these three different sets of AT commands result in the need of three different device drivers (drives), and the device drivers are lack of versatility. In order to complete a WWAN service request and respond, the object identifier (Object Identifier, OID) command of each WWAN service must be parsed, and mapped into one or more corresponding standard AT commands; additionally, one or more AT command response data must be combined, so as to be converted to an OID response adapted to the WWAN server. The mutual transformation between an OID command and AT commands is accomplished by a device driver currently, thus, the device driver must have three different processing methods for the three standards, and the equipment versatility cannot be guaranteed.

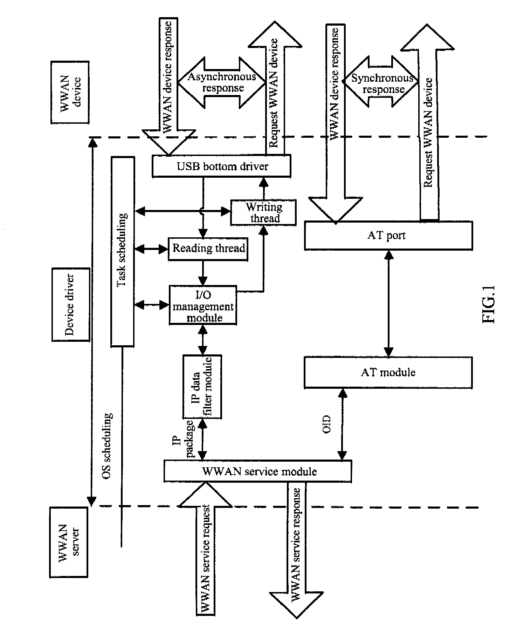

FIG. 1 is a method and a system for driving a current device drive. In order to implement the processing of an OID service, in the case of ensuring a WWAN device unchanged, an AT port is added between the device driver (drive) and the WWAN device to communicate with each other; the device driver parses an OID service request, and divides the OID service into one or more AT commands to be issued, and then synchronously waits for AT data back, finally returns the collected data back to the WWAN server.

In addition, since the AT module in the device driver and the WWAN device adopts a synchronous communication mode, the processor needs to wait for a synchronous response of the WWAN device, thus resulting in reduction of the processing capacity of the device driver. Especially during the concurrent processing of OID, the I/O processing of the AT module is sometimes blocked. Additionally, the AT module not only deals with the WWAN device responses, but also handles an active report of the WWAN device in time, thus interlacing the AT commands frequently. Furthermore, the consistency between the state of the operating system and the state of the WWAN device should be ensured in time. In summary, system stability of the device driver of the AT mode is poor.

### Summary of the Invention

The technical problem to be solved by the present invention is to provide a universal driving method and a driver of a mobile broadband device, so as to address the issue of the bad versatility and the poor stability of device drivers in the existing technology.

In order to solve the aforementioned technical problem, the present invention provides a universal driving method of a mobile broadband device, and the method comprises:
a Wireless Wide Area Network (WWAN) server sending an Object Identifier (OID) service request to a driver;
the driver sending the OID service request to a WWAN device; and
the WWAN device responding after parsing the OID service request, and then sending a response result to the driver, and the driver sending the response result to the WWAN server.

The communication mode between the driver and the WWAN server is an asynchronous communication.

The OID service request comprises: a synchronous OID service request and an asynchronous OID service request.

The method further comprises: when the OID service request is a synchronous OID service request, the driver acquiring data required by the OID service request from an adapter thereof, and sending the data to the WWAN server.

When the OID service request is an asynchronous OID service request, the step of the driver sending the OID service request to the WWAN device comprises: the driver sending the OID service request to the WWAN device by means of an asynchronous communication.

In order to solve the aforementioned technical problem, the present invention also provides a universal driver of a mobile broadband device, and the driver comprises:
a Wireless Wide Area Network (WWAN) service module, which is configured to receive an Object Identifier (OID) service request sent by a WWAN server, and to send a response result of the OID service request made by a WWAN device to the WWAN server;
a protocol conversion module, which is configured to pack the received OID service request, and to unpack the response result; and
an input/output (I/O) management module, which is configured to perform cache management and state maintenance of all I/O data, so as to implement an asynchronous communication between the driver and the WWAN device.

The I/O management module further comprises:
a concurrency control sub-module, which is configured to coordinate a concurrent sending capability of the driver, and a WWAN device receiving capability.

The OID service request comprises a synchronous OID service request and an asynchronous OID service request.

When the OID service request is a synchronous OID service request, the WWAN server is further configured to acquire data required by the OID service request from an adapter of the universal driver, and to send the data to the WWAN server.

When the OID service request is an asynchronous OID service request, the I/O management module is configured to send the OID service request to the WWAN device by means of an asynchronous communication.

The beneficial effect is as follows:
The present invention is implemented by delivering the parse processing of the OID service to the WWAN device, and the driver only has a transparent transmission function, therefore the driver is universal and is able to adapt to WWAN devices in different standards; the AT module is deleted, and it's I/O function utilizes the existing reading and writing threads, thus simplifying the complex process in the existing AT module, and guaranteeing the stability and robustness of the device drivers.

### Brief Description of Drawings

FIG. 1 is a composition diagram of a mobile broadband device driver system in the existing technology;
FIG. 2 is a flow chart of a universal driving method of a mobile broadband device in accordance with an embodiment of the present invention;
FIG. 3 is a flow chart of a universal driving method of a mobile broadband device, which implements a flow of downloading self-defined protocol data, in accordance with an embodiment of the present invention;
FIG. 4 is a flow chart of a universal driving method of a mobile broadband device, which implements a flow of uploading self-defined protocol data, in accordance with an embodiment of the present invention;
FIG. 5 is a structural diagram of a universal driver of a mobile broadband device in accordance with an embodiment of the present invention.

### Preferred Embodiments of the Present Invention

In order to solve the problem of the bad versatility and the poor stability of device drivers in the existing technology, the present invention provides a universal driving method and a driver of a mobile broadband device, and the present invention will be illustrated in further detail below in combination with accompanying drawings and embodiments. It should be understood that the specific embodiments described here are only used to explain the present invention, rather than to limit the present invention.

The basic idea of the present invention is: abandoning the AT port transmission, using the existing NDIS (Network Driver Interface Specification) port to transfer an OID service request to a WWAN device, and making the WWAN device parse the OID service request and return a response result asynchronously. In this way, a device driver (drive) does not need to care about the OID parsing, and is just taken as a data transfer of the OID service requests and responses to construct a virtual transparent transmission channel between the WWAN device and WWAN server. In order to implement the virtual transparent transmission channel, a protocol conversion module is added to ensure the communication between the device driver and the WWAN device. In addition, the communication mode related with the OID data service between the device driver and the WWAN device is changed from synchronous to asynchronous, and a self-defined communication protocol is added to coordinate the asynchronous communication mechanism; some data needed to be maintained is transferred to the WWAN device to be saved, so as to be returned back when the WWAN device responding, thus reducing the coupling degree of the device driver code, and increasing the stability and robustness of the device driver.

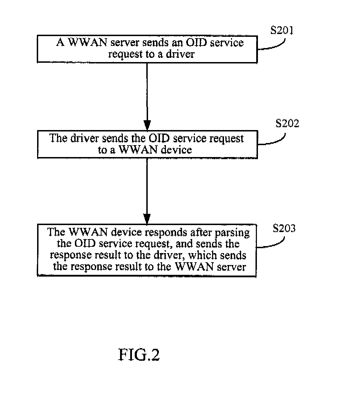

As shown in FIG. 2, the embodiment of the present invention involves a universal driving method of a mobile broadband device, and the method comprises the following steps:
In step S201, a WWAN server sends an OID service request to a driver.
In step S202, the driver forwards the OID service request to a WWAN device. Since the communication protocol between the WWAN server and the driver, and that between the driver and the WWAN device are not the same, the driver packs the data after receiving the OID service request data, and the packed data complies with the requirement of the communication protocol between the driver and the WWAN device; and then the packed data are sent to the WWAN device.
In step S203, the WWAN device responds after parsing the OID service request, and sends the response result to the driver, which forwards the response result to the WWAN server. The WWAN device parsing the OID service request means that the WWAN device deals with the OID service request according to the adopted standards to acquire the corresponding data, for example the WWAN device adopting TD-SCDMA maps the OID service request into one or more AT commands of the corresponding standards. The WWAN device responding to the parsed OID service request means that packing the parsed data to get the response result. For example: the WWAN device adopting TD-SCDMA acquires the corresponding data of each AT command according to the parsed AT command, and combines response data of one or more AT commands to get the response result. The WWAN device sends the response result to the driver, which converts the response result to an OID response meeting the requirement of the communication with the WWAN server and sends the OID response to the device which has a function of parsing the OID service request.

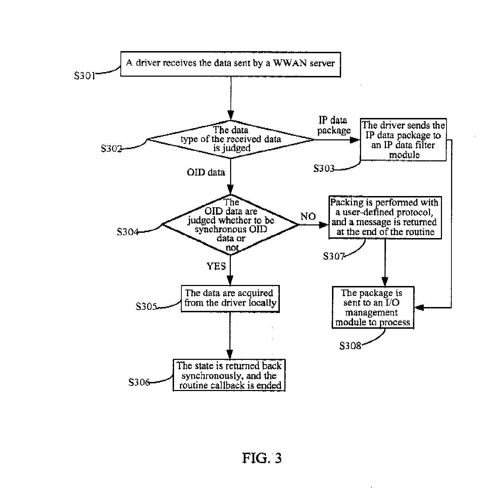

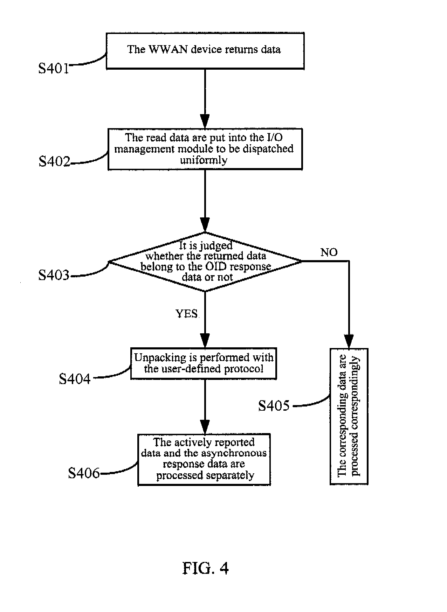

In the embodiment, two flows of data downloading and data uploading are comprised in fact, and the embodiment will be respectively illustrated in detail in combination with the FIG. 3 and the FIG. 4.

As shown in FIG. 3, the flow of a universal driving method of a mobile broadband device implementing downloading of self-defined protocol data in accordance with the embodiment comprises the following steps:
In step S301, a driver receives the data sent by a WWAN server.
In step S302, the data type of the received data is judged, if being OID data, the driver skips to the step S304; if being an IP data package, proceeds to the step S303.
In step S303, for an IP data package, the driver only transmits rather than responds, therefore, the driver sends the IP data package to an IP data filter module, and then skips to the step S308.
In step S304, for OID data, the OID data are further judged whether to be the synchronous OID data or not, that is, the received OID service request is a synchronous OID service request or an asynchronous one, if being a synchronous OID service request, the driver proceeds to the step S305; if being an asynchronous OID service request, skips to the step S307.
In step S305, since the data required by the synchronous OID service request usually does not possess a real-time characteristic, and is fixed and unchanged, the data required by the synchronous OID service request is maintained locally on the device driver, and the returned parameters of the routine are filled from the memory maintained by an adapter.
In step S306, at the end of the routine, the data for synchronously responding to the OID service request is returned back to the WWAN server synchronously, thus implementing a state interaction between the WWAN server and the driver.
In step S307, for an asynchronous OID service request, since the applied data are needed to be acquired from the WWAN device after responding to the OID service request asynchronously, the required data cannot be returned back at the end of the routine generally, for example an operation of querying the network. Therefore, a message rather than the data required by the OID service request is returned back at the end of the routine, to implement the state interaction between the WWAN server and the driver. And then, the asynchronous OID service request is packed with a self-defined protocol, packing with a user-defined protocol in accordance with the embodiment means that the asynchronous OID service request is converted to the one in a data format meeting the requirement of the communication between the driver and the WWAN device.
In step S308, after packing the asynchronous OID service request with the self-defined protocol, the driver directly transfers the package to an I/O management module, which implements an asynchronous transmission and an asynchronous response. In addition, the I/O management module directly sends the received IP data package sent by the IP data filter module to the WWAN device.

As shown in FIG. 4, the process of a universal driving method of a mobile broadband device implementing uploading of self-defined protocol data, in accordance with the embodiment, comprises the following steps:
In step S401, the WWAN device responds after parsing the OID service request, and sends a response result to the driver. The driver needs to read and to deal with any return (response result) of the WWAN device, therefore a separate kernel thread is created to implement the task. When reading the OID service data of the WWAN device, the kernel loop is replaced with the kernel system thread to read from the AT port, which has the advantage of the timeliness. Since the scheduling priority of a system thread is higher, the response of the OID service data for the WWAN server is also more timely, and thereby the better state maintenance of the WWAN device and the WWAN server is able to be achieved.
In step S402, the driver reads the data via the reading thread firstly, and saves the data into the memory according to the state of the data, so as to be dispatched by the I/O management module uniformly. The I/O management module applies for a memory for each I/O data, to compose an I/O chained list so as to perform the cache maintenance. Each memory responds to one of the following five states, and the I/O management module performs a unified dispatching according to the state of each memory to implement the asynchronous sending and the asynchronous response. The five states specifically are:
   1) Null state, which indicates the member of the chained list is null and not used;
   2)Concurrency control state, which indicates that the member of the chained list is used, but in a scheduling state of a concurrency control sub-module; and whether the number of concurrences to be sent exceeds the set number of concurrences or not is judged;
   3)A state of waiting for USB sending, which indicates that the member of the chained list is used and is scheduled by the concurrency control sub-module, and is not waiting for the scheduling of the writing thread;
   4)A state of finishing sending and waiting for a response, which indicates that the member of the chained list waits to be matched to the response data;
   5)Matching completion state, which indicates that the member of the chained list is successfully matched to the response data.
In step S403, since there are IP return packages, service control data and OID response data in the data returned by the WWAN device, these different types of data need to be classified and to be dealt with. Therefore, it is required to judge whether the data returned by the WWAN device belongs to the OID response data or not, if yes, proceeds to the step S404, otherwise, skips to the step S405.
In step S404, since the format of the OID response data is the self-defined communication protocol based on the communication between the driver and the WWAN device, an unpacking processing needs to be performed for the OID response data. Herein the self-defined communication protocol refers to any protocol complying with the communication between the driver and the WWAN device.
In step S405, the corresponding data being handled correspondingly means dealing with the IP return packages and the service control data appropriately, and specifically is: the IP return packages are uploaded to the WWAN server; for the service control data, a service corresponding to the service control data is started to communicate with the WWAN device.
In step S406, the unpacked OID response data needs to be classified into the actively reported data and the asynchronous response data to be handled. For the asynchronous response data, it is required to judge whether the asynchronous response data are within the range of the preset time for dealing with the asynchronous response or not, if yes, the data are packed and then be sent to the WWAN server; if the time is out, the memory is directly changed to be in a null state. For the actively reported data, after the WWAN device returns the response result according to the self-defined protocol, the return information together with the pointer information (that is the address information of the WWAN server) of the local network adapter can comply with all the information for the device driver to send the active request to the WWAN server actively. The device driver actively sending the active request to the WWAN server means that the device driver sometime needs to send the active request to the WWAN server actively, rather than respond to the OID service request sent by the WWAN server. In this case, the WWAN device sends the OID data to the driver; the driver unpacks the OID data after receiving the OID data, and then packs the received information together with the address information of the WWAN server after unpacking, and then sends to the WWAN server.

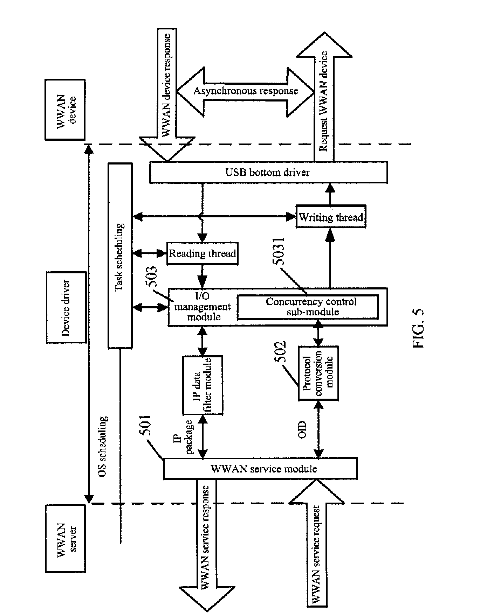

In order to implement the aforementioned driving method, the present invention also involves a universal driver of a mobile broadband device, and as shown in FIG. 5, the driver comprises:
a WWAN service module 501, which is used to receive an OID service request sent by a WWAN server, and to send a response result of the OID service request made by the WWAN server to the WWAN server;
a protocol conversion module 502, which is used to pack the received OID service request and to unpack the response result;
an I/O management module 503, which is used to perform cache management and state maintenance of all I/O data, to implement an asynchronous communication between the device driver and the WWAN device.

The WWAN service module 501, as an I/O interface between the device driver and the WWAN server, is responsible for receiving the service request of the WWAN server, and sending the received asynchronous response of the WWAN device data to the WWAN server in time, or reporting the OID data to the WWAN server actively. There are IP packages to be sent, received IP packages, synchronous OID requests, asynchronous OID requests and the data returned by the WWAN device and so on, in the data handled by the module.

The NDIS6.2 driver interface provides the corresponding processing routine for the IP data and OID service data in the device driver, but does not distinguish between synchronous OID service requests and asynchronous OID service requests, and the distinguishing processing is implemented by the I/O management module 503.

The protocol conversion module 502 is used to pack the synchronous OID service request data in the WWAN server request and to unpack related synchronous OID data return package returned back by the WWAN device. Packing the synchronous OID service request data in the WWAN server request means converting the synchronous OID service request data to the data in a data format readable to the WWAN device; unpacking the related synchronous OID data return package (the response result) returned back by the WWAN device means extracting the address information of the WWAN server and converting the synchronous OID data return package to the data in a data format readable to the WWAN server.

The OID service request data involves two parts: a specific service request entity and the relevant information indicating the service request. An OID service request entity corresponds to an OID structure, which is used to save the state and data of some specific OID. The relevant information of the service request specifically consists of RequestId, RequestHandle and so on. The information of RequestId and RequestHandle indicates data source address of the service request entity, and when the device driver actively sends an active message request after receiving the return of the WWAN device, the device driver needs to take the aforementioned relevant information as the destination address of the active initiation.

The WWAN device needs to parse and return data, and only the aforementioned service request entity and simple OID information, such as an OID type and OID RequestType, are required to implement the data interaction between the WWAN device and the device driver. RequestId and RequestHandler are also sent to the WWAN device as a part of the communication protocol to performs the storage and maintenance of the return. Therefore, it does not need to maintain any information for each OID service request in the device driver, thus simplifying the I/O processing logic of the device driver, and reducing the degree of code coupling.

Additionally, taking into account the compatibility of 32bits systems and 64bits systems, there is a special provision for the pointer (the address information of the WWAN server) in the self-defined protocol that a unified space of 8 bytes is applied to save data. At the same time, after the WWAN device returns the response result in accordance with the self-defined protocol, the return information together with the pointer information (that is the address information of the WWAN server) of the local network adapter can comply with all the information for the device driver to send the active request to the WWAN server actively.

The I/O management module 503 is used to perform cache management and state maintenance of all I/O data in the functional device driver. The module self-defines an ordered structure (including the OID structure and the pointer information corresponding to the OID service request entity), or a model, to apply for a memory for each I/O data, and to compose an I/O chained list to perform the cache maintenance. A set of states are self-defined in the aforementioned self-defined structure, and the corresponding state maintenance is performed, to achieve an effective management of each member in I/O queue.

For the OID data packed with the user-defined protocol, the I/O processing can completely be implemented by using the existing reading and writing threads, and the cache processing and state maintenance can be implemented by the I/O management module 503. But the Existing I/O management module is designed in accordance with the maximum concurrency capacity when maintaining the state of the sent data. In order to be able to adapt to a variety of the WWAN devices having a different capacities of concurrent OID processing, a concurrency control sub-module 5031 for processing the OID concurrency is added within the I/O management module 503, to coordinate the difference between the concurrent sending capability of the driver and the WWAN device receiving capability. For example, the concurrent sending capability of the drive is 30, while the WWAN device receiving capability is 10, if the driver sends the OID data with the maximum concurrency capacity, a data block should be formed. While in the embodiment, relevant configuration parameters of the concurrency control sub-module 5031 are configured in the INF (Device INFormation File) file, so that the unification of the concurrent sending capability of the driver and the WWAN device receiving capability can be achieved. Thus the program of the device driver does not need to be compiled again, when the capacity of the OID concurrent processing is required to be changed.

Currently, for the maximum concurrency capacity processing system, the states of each data block in the memory comprise the following types:
1)Null state, which indicates the member of the chained list is null and not used;
2)A state of waiting for USB sending, which indicates that the member of the chained list is used, and waits for the scheduling of the writing thread
3)A state of finishing sending and waiting for a response, which indicates that the member of the chained list waits to be matched to the response data;
4)Matching completion state, which indicates that the member of the chained list is successfully matched to the response data.

Since the concurrency capacity control is added, a state is added to be used for the maintenance, between the state (1) and state (2), and at last the states of each data block in the memory comprise:
1) Null state, which indicates the member of the chained list is null and not used;
2)Concurrency control state, which indicates that the member of the chained list is used, but in a scheduling state of the concurrency control sub-module; and whether the number of concurrences to be sent exceeds the set number of concurrences or not is judged;
3)A state of waiting for USB sending, which indicates that the member of the chained list is used and is scheduled by the concurrency control sub-module, and is now waiting for the scheduling of the writing thread;
4)A state of finishing sending and waiting for a response, which indicates that the member of the chained list waits to be matched to the response data;
5)Matching completion state, which indicates that the member of the chained list is successfully matched to the response data.

The I/O management module 503 schedules each data block according to the state of each data block within the memory. For example, for a data block in the null state, the data block is scheduled to be used when the OID data are received; for a data block in the concurrency control state, whether the number of concurrences to be sent exceeds the set number of concurrences or not is judged, and the state is adjusted according to the set number of concurrences; for a data block in the state of waiting for USB sending, the data block is scheduled by the writing thread to send the OID data; for a data block in the state of finishing sending and waiting for a response, the state of the data block is modified to the matching completion state after the data are completely sent; for a data block in the matching completion state, the state of the data block is modified to the null state.

It can be seen from the aforementioned embodiments, the present invention is implemented by delivering the parse processing of the OID service to the WWAN device, and the driver only has a transparent transmission function, therefore the driver is universal and is able to adapt to WWAN devices in different standards; the AT module is deleted, and it's I/O function utilizes the existing reading and writing threads, thus simplifying the complex process in the existing AT module, and guaranteeing the stability and robustness of the device drivers; after a concurrency control sub-module is added, it dies not need to worry about the concurrent receiving capacity after coordinating the concurrent sending capability of the driver and the WWAN device receiving capability, and it is ensured that a response or an active report made by the WWAN device is returned back to the WWAN server in time.

For the purpose of illustrating, the preferred embodiments of the present invention are disclosed, however, the skilled in the field should be aware that various improvements, enhancements and replacements are also possible; therefore, the scope of the present invention should not be limited to the above embodiments.

Those skilled in the field should understand that all or parts of steps of the aforementioned method can be completed by programs instructing the corresponding hardware, and the programs might be stored in a computer readable storage medium, such as a read-only memory, a disk, or a CD-ROM and so on. Alternatively, all or parts of steps of the aforementioned embodiments can be implemented with one or more integrated circuits. Correspondingly, each module or unit can be implemented in the form of hardware, as well as software functional modules. The present invention is not limited to any specific combinations of hardware and software.

### Industrial Applicability

The present invention is implemented by delivering the parse processing of an OID service to a WWAN device, and a driver only has a transparent transmission function, therefore the driver is universal and is able to adapt to WWAN devices in different standards; the AT module is deleted, and it's I/O function utilizes the existing reading and writing threads, thus simplifying the complex process in the existing AT module, and guaranteeing the stability and robustness of the device drivers.

## Claims

1. A universal driving method of a mobile broadband device, and the method comprises:
a Wireless Wide Area Network (WWAN) server sending an Object Identifier (OID) service request to a driver;
the driver sending the OID service request to a WWAN device; and
the WWAN device responding after parsing the OID service request, and then sending a response result to the driver, and the driver sending the response result to the WWAN server.

2. The universal driving method of a mobile broadband device according to claim 1, wherein, a communication mode between the driver and the WWAN device is an asynchronous communication.

3. The universal driving method of a mobile broadband device according to claim 1, wherein, the OID service request comprises: a synchronous OID service request and an asynchronous OID service request.

4. The universal driving method of a mobile broadband device according to claim 3, further comprising: when the OID service request is the synchronous OID service request, the driver acquiring data required by the OID service request from an adapter thereof, and sending the data to the WWAN server.

5. The universal driving method of a mobile broadband device according to claim 3, wherein, when the OID service request is the asynchronous OID service request, the step of the driver sending the OID service request to the WWAN device comprises: the driver sending the OID service request to the WWAN device by means of an asynchronous communication.

6. A universal driver of a mobile broadband device, comprising:
a Wireless Wide Area Network (WWAN) service module, which is configured to receive an Object Identifier (OID) service request sent by a WWAN server, and to send a response result of the OID service request made by a WWAN device to the WWAN server;
a protocol conversion module, which is configured to pack the received OID service request, and to unpack the response result; and
an input/output (I/O) management module, which is configured to perform cache management and state maintenance of all I/O data, so as to implement an asynchronous communication between the driver and the WWAN device.

7. The universal driver of a mobile broadband device according to claim 6, wherein, the I/O management module further comprises:
a concurrency control sub-module, which is configured to coordinate a concurrent sending capability of the driver, and a WWAN device receiving capability .

8. The universal driver of a mobile broadband device according to claim 6, wherein, the OID service request comprises a synchronous OID service request and an asynchronous OID service request.

9. The universal driver of a mobile broadband device according to claim 8, wherein, when the OID service request is the synchronous OID service request, the WWAN service module is further configured to acquire data required by the OID service request from an adapter of the universal driver, and to send the data to the WWAN server.

10. The universal driver of a mobile broadband device according to claim 8, wherein, when the OID service request is the asynchronous OID service request, the I/O management module is configured to send the OID service request to the WWAN device by means of an asynchronous communication.
